# EUROPEAN PATENT APPLICATION

(11) **EP 4 733 749 A2**
(43) Date of publication of application: **29.04.2026**
(21) Application number: 25194521.8
(22) Date of filing: 07.08.2025
(51) Int. Cl.: G01N 21/90

(54) **APPARATUS FOR VERIFYING THE CONFORMITY OR DEFECTIVENESS OF CORRESPONDING ARTICLES**

(30) Priority: 08.08.2024 IT 202400018775
(71) Applicant: P.B.L. Srl, 43046 Solignano (PR) (IT)
(72) Inventor: SERVENTI, Franco, FORNOVO DI TARO (IT); SORRENTINO, Catello, COLORNO (PR) (IT); FILIZOLA, Lorenzo, FELINO (PR) (IT); BEGARANI, Filippo, FORNOVO DI TARO (IT)
(74) Representative: Fanzini, Valeriano

(57) **Abstract**

An apparatus (10) for verifying the conformity or defectiveness of articles (11), in particular of packages containing a respective product (13), preferably in the form of a pharmaceutical product, or for curative or medical use, comprises means (14) for advancing said articles (11), and means (16) for inspecting the same articles (11). Said apparatus (10) for verifying the conformity or defectiveness of corresponding articles (11), or said means (16) for inspecting said articles (11), comprises, or comprises, a plurality of sections (18, 20, 22, 24) for inspecting said articles (11).

## Description

The present invention refers to an apparatus for verifying the conformity or defectiveness of corresponding articles.

Preferably, said articles are in the form of packages containing a respective product, preferably in the form of a pharmaceutical product, or for curative or medical use.

Units for verifying the conformity or defectiveness of packages containing a pharmaceutical product, or for curative or medical use are known, which comprise corresponding means for inspecting the same articles, and which operate at rather reduced speeds and which are also manually fed by the operators in charge.

With these already known units, although it is possible to carry out a verification of said articles that is of significant quality, i.e. that has a reduced risk of obtaining false positives or false negatives, it is not possible at the same time to operate with a high productivity, that is, with a high working speed, and, therefore, these units considerably slow down the working speed of the plants in which they are inserted, which, without these inspection units, would instead operate at rather high working speeds.

To overcome this drawback, the number of verification units that are used in the respective plant is multiplied, however without obtaining particularly high working speeds and moreover using excessive spaces within the industrial plants in which they are used.

According to another drawback, with said already known units, it is not possible to detect details of the article, in particular of the package, which are not visible to the human eye.

With the present invention it is therefore wished to propose a new solution and/or an alternative to the solutions known up to now and in particular it is proposed to overcome one or more of the drawbacks or problems referred to above, and/or to satisfy one or more requirements referred to above and/or in any case experienced in the art, and in particular which can be inferred from above.

An apparatus for verifying the conformity or defectiveness of articles, in particular of packages containing a respective product, preferably in the form of a pharmaceutical product, or for curative or medical use is therefore provided; preferably the respective package being in the form of a bag, in particular in flexible material or film, or being in the form of an ampoule, a bottle, or the like, and especially constituted by a transparent material, or at least partly by a transparent material, at a corresponding electromagnetic radiation; the apparatus comprising means for inspecting the same articles and is characterized in that it comprises a plurality of sections for inspecting said articles.

In this way, it is possible to carry out a verification of said articles that is of relevant quality, i.e. that has a reduced risk of obtaining false positives or false negatives, at the same time however operating with a high productivity or high working speed.

The present apparatus can be inserted in plants or apparatuses operating at high working speeds, in particular without slowing down or reducing their productivity.

According to another aspect an apparatus for verifying the conformity or defectiveness of articles, in particular of packages containing a respective product, preferably in the form of a pharmaceutical product, or for curative or medical use is provided; preferably the respective package being in the form of a bag, in particular in flexible material or film, or being in the form of an ampoule, a bottle, or the like, and especially being constituted by a transparent material, or at least partly by a transparent material, at a corresponding electromagnetic radiation; the apparatus comprising means for inspecting the same articles and is characterized in that said apparatus for verifying the conformity or defectiveness of corresponding articles, or said means for inspecting said articles, comprises a plurality of, in particular a first and a second, inspection sectors, or lines, for respective articles having respective means for advancing the corresponding articles, each inspection sector having one or more, preferably a plurality, of respective sections for inspecting said articles.

In this way, it is possible to carry out a verification of said articles that is of relevant quality, i.e. that has a reduced risk of obtaining false positives or false negatives, at the same time however operating with a high productivity or high working speed.

The present apparatus can be inserted in plants or apparatuses operating at high working speeds, in particular without slowing down or reducing their productivity.

The present apparatus can be inserted in plants or apparatuses operating at high working speeds, in particular without slowing down or reducing their productivity.

This and other innovative aspects or respective advantageous embodiments, are however, set forth in the appended claims, the specific technical characteristics of which can be found, together with corresponding advantages achieved, in the following detailed description, illustrating a purely non-limiting exemplary embodiment of the invention, which is made with reference to the appended drawings, in which:
- figure 1A illustrates a schematic side elevation view of a preferred embodiment of apparatus according to the present invention;
- figure 1B illustrates a schematic top plan view of the preferred embodiment of apparatus according to the present invention;

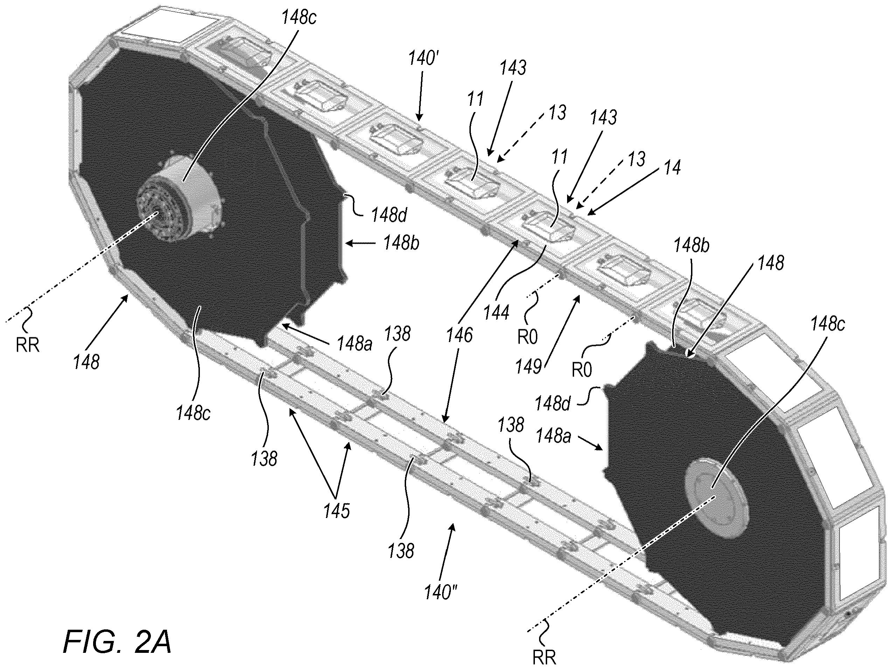

- figure 2A illustrates a schematic perspective view of a preferred embodiment of used conveyor of the preferred embodiment of apparatus according to the present invention;

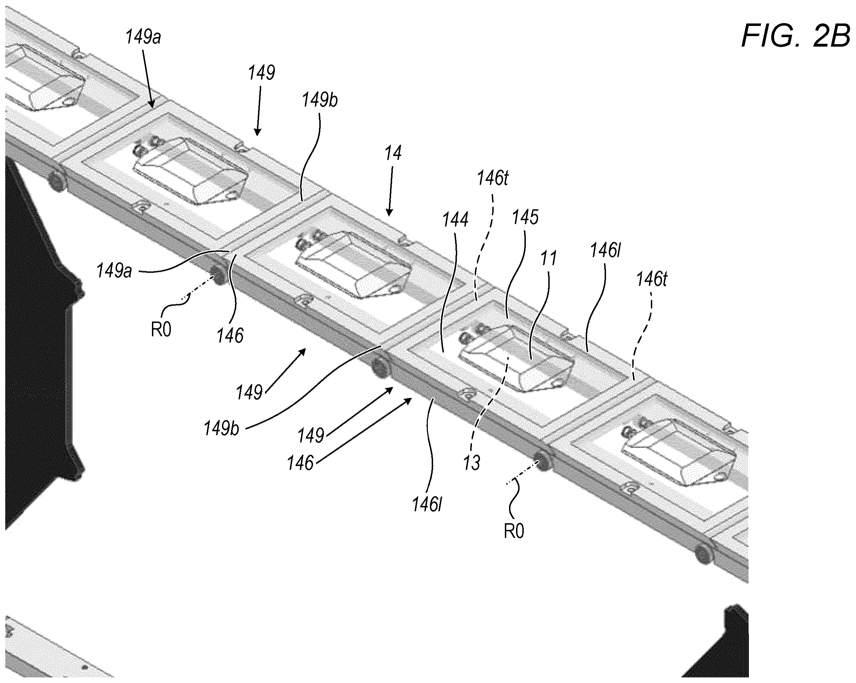

- figure 2B illustrates a schematic perspective view of a magnified detail of figure 2A;

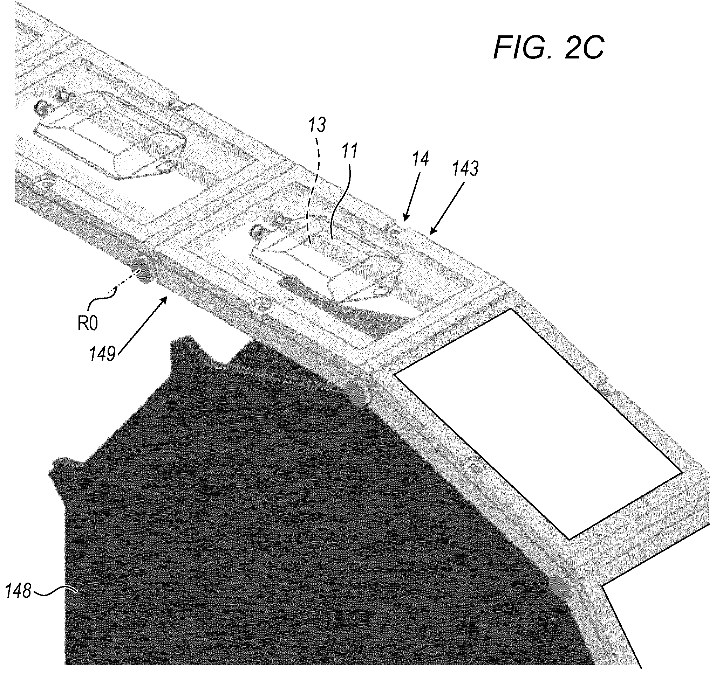

- figure 2C illustrates a schematic perspective view of another enlarged detail of figure 2A;
- figure 3 illustrates a block diagram of a preferred embodiment of artificial intelligence means that are used in the preferred embodiment of apparatus according to the present invention.

A preferred embodiment 10 of apparatus for verifying the conformity or defectiveness of articles 11, in particular of packages containing a respective product 13, preferably in the form of a pharmaceutical product, or for curative or medical use, is illustrated in the attached figures.

In particular preferably the pharmaceutical product is in the form of an injectable type product which is transparent at least to a respective electromagnetic radiation.

In particular, said product 13 is in the form of a liquid or semi-liquid product.

Preferably the respective package is in the form of a bag, in particular in flexible material or film, or is in the form of an ampoule, a bottle, or the like, and especially is constituted, or is constituted at least partly, by a transparent material, at a corresponding electromagnetic radiation.

Preferably, said transparent material, or at least partly from a transparent material, may be a transparent plastic film, in particular for the bag in flexible material or film, or it may be glass or transparent plastic, in particular for the ampoule or bottle, in rigid or substantially rigid material.

It should be understood that the present apparatus can be used to inspect products and/or packages that are transparent to any electromagnetic radiation.

In particular, it should be understood that the present apparatus can be used to inspect products and packages that are transparent to visible light, as well as products and/or packages that are also not transparent to visible light and that are in any case transparent to a corresponding electromagnetic radiation, different from the visible electromagnetic radiation, as will be better understood from the continuation of the present description.

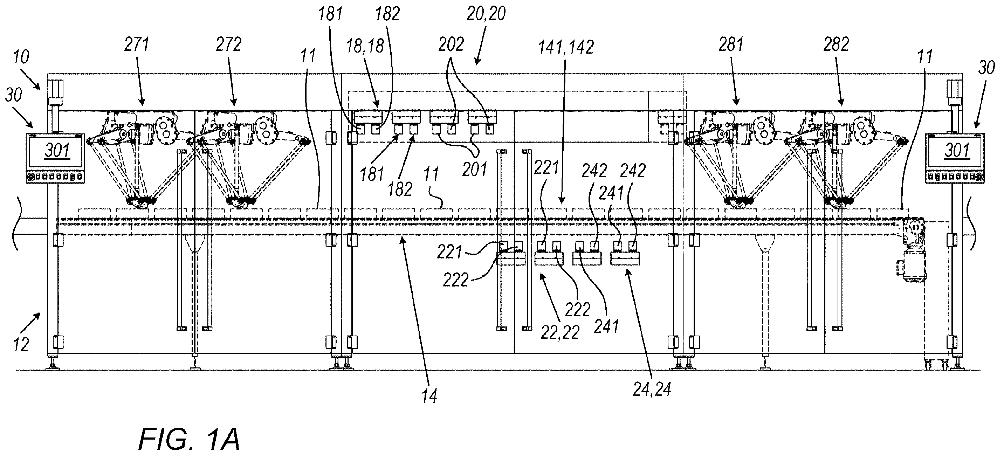

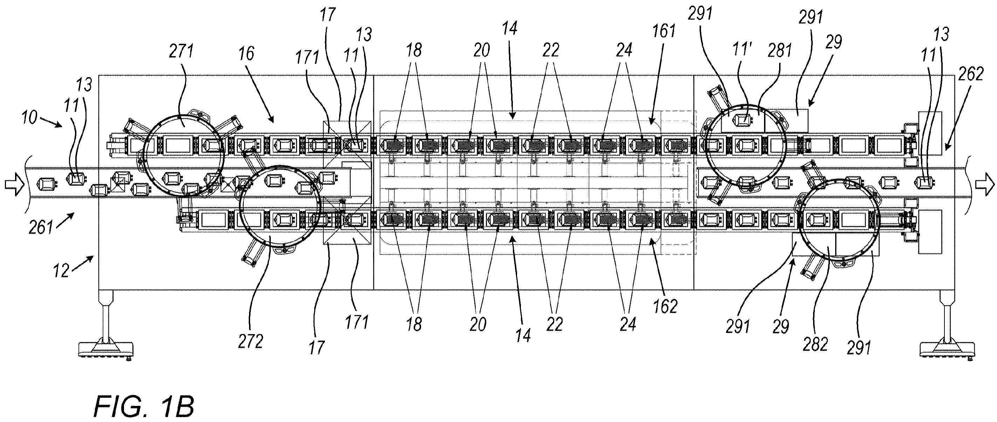

As illustrated in Figures 1A and 1B, the apparatus 10 comprises means, or frame, 12 for supporting, means 14 for advancing said articles 11, and means 16 for inspecting the same articles 11.

In an appreciably advantageous manner, as illustrated, said means 16 for inspecting said articles 11 are adapted to detect said articles 11, while they advance on said means 14 for advancing the same articles 11.

In this way, it is possible to carry out a verification of said articles that is of significant quality, i.e. that has a reduced risk of obtaining false positives or false negatives, at the same time operating with a high productivity or high working speed. The present apparatus 10 can be inserted in plants or apparatuses operating at high working speeds, in particular without slowing down or reducing their productivity.

As can be seen from said figures, advantageously, said apparatus 10 for verifying the conformity or defectiveness of corresponding articles 11, or said means 16 for inspecting said articles 11, comprise a plurality of sections 18, 20, 22, 24 for inspecting said articles 11. In particular, it may be envisaged to use a first and a second inspection section, or especially it may be envisaged to use a first, a second and a third inspection section, and preferably, as illustrated in said figures 1A and 1B, a first, a second, a third and a fourth inspection sections 18, 20, 22, 24 are used. It is understood that, however, a greater number of inspection sections is also conceivable.

In this way, it is possible to carry out a verification of said articles that is of significant quality, i.e. that has a reduced risk of obtaining false positives or false negatives, at the same time operating with a high productivity or high working speed.

The present apparatus 10 can thus be inserted in plants or apparatuses operating at high working speeds, in particular without slowing down or reducing their productivity.

In a particularly advantageous manner, said apparatus 10 for verifying the conformity or defectiveness of corresponding articles 11, i.e. said means 16 for inspecting said articles 11, comprise a plurality of, in particular a first and a second inspection sectors, or lines, 161, 162 for respective articles 11 having respective means 141, 142 for advancing the corresponding articles 11, each inspection sector 161, 162 having one or more, preferably a plurality, of respective inspection sections 18, 20, 22, 24 of said articles 11.

In this way, it is possible to carry out a verification of said articles that is of significant quality, i.e. that has a reduced risk of obtaining false positives or false negatives, at the same time operating with a high productivity or high working speed.

The present apparatus 10 can be inserted in plants or apparatuses operating at high working speeds, in particular without slowing down or reducing their productivity.

With appreciable advantage, the sections 18, 20, 22, 24 for inspecting said articles 11 are distributed along the corresponding means 14 for advancing said articles 11, and are preferably arranged one after the other, i.e. one immediately after the other.

As can be seen from said figures, advantageously, said apparatus 10 for verifying the conformity or defectiveness of corresponding articles 11 comprises corresponding means 14 for advancing said articles 11, which, in particular, comprise a plurality of, in particular first and second, means 141, 142 for advancing respective articles 11, respectively in corresponding, in particular first and a second inspection sectors, or lines, 161, 162 for respective articles 11.

In an appreciably advantageous manner, the respective means 14 for advancing said articles 11 are adapted to advance said articles 11 with continuous advancement speed, or, according to a different embodiment, the respective means 14 for advancing said articles 11 are adapted to advance said articles 11 with intermittent advancement motion.

With advantage, as can be seen from said figures, said means 16, i.e. the respective inspection section 18, 20, 22, 24, comprises respective means 181, 182, 201, 202, 221, 222, 241, 242 for detecting the respective article 11 that follow in advancing the respective article 11, when it moves with continuous advancement motion.

According to a different embodiment, the respective means 181, 182, 201, 202, 221, 222, 241, 242 for detecting the respective article 11 remain stationary, while said articles 11 advance with intermittent advancement motion, stopping at the same detection means to such an extent that the detection of the same articles 11 by the same article detection means is allowed.

As can be seen from said figures, advantageously, the means 14 for advancing said articles 11 extend longitudinally, preferably linearly.

In particular, said plurality of, especially said first and said second, means 141, 142 for advancing respective articles 11, respectively of corresponding, in particular said first and second, inspection sectors, or lines, 161, 162 for respective articles 11, extend longitudinally, preferably linearly, and especially parallel to each other.

As can be seen from said figures, with appreciable advantage, said sections 18, 20, 22, 24 for inspecting said articles 11 are aligned with each other, in particular longitudinally aligned, preferably according to the direction of development of the same means 14 for advancing said articles 11, or according to the direction of advancement of the same articles 11.

Advantageously, as can be seen from said figures, the respective section 18, 20, 22, 24 for inspecting said articles 11 comprises respective means 181, 182, 201, 202, 221, 222, 241, 242 for detecting said articles 11 on said means 14 for advancing said articles 11.

Advantageously, as can be seen from said figures, the respective section 18, 20, 22, 24 for inspecting said articles 11 comprises a plurality of, in particular a first and a second, respective devices 181, 182, 201, 202, 221, 222, 241, 242 for detecting said articles 11, in particular said devices 181, 182, 201, 202, 221, 222, 241, 242 for detecting the respective inspection section 18, 20, 22, 24 are aligned with each other, and preferably are longitudinally aligned with each other.

As can be seen from said figures, with advantage, the respective one, i.e. the plurality of, in particular the first and the second, devices 181, 182, 201, 202, 221, 222, 241, 242 for detecting said articles 11, of the respective inspection section 18, 20, 22, 24, is arranged, or are arranged, along the same direction, in particular longitudinal, or are longitudinally aligned, to the respective one, i.e. the plurality of, in particular the first and the second, devices 181, 182, 201, 202, 221, 222, 241, 242 for detecting the articles 11 of one or more other inspection sections 18, 20, 22, 24 of the apparatus 10.

In a particularly advantageous manner, the respective one, i.e. the plurality of, in particular the first and the second, devices 181, 182, 201, 202, 221, 222, 241, 242 for detecting said articles 11 of the respective inspection section 18, 20, 22, 24, or of a plurality of inspection sections 18, 20, 22, 24, is movable, or are movable, according to the direction of advancement of said articles 11, or, according to a different embodiment, remain static in the respective detection position.

Advantageously, the respective one, i.e. the plurality of, in particular the first and second, devices 181, 182, 201, 202, 221, 222, 241, 242 for detecting said articles 11 of the respective inspection section 18, 20, 22, 24, or of a plurality of inspection sections 18, 20, 22, 24, is movable, or are movable, together with the corresponding articles 11, in particular according to the direction of advancement of the same articles 11, or according to the longitudinal direction of advancement thereof, or, according to a different embodiment, remain static in the respective detection position while the same articles move with intermittent motion alternating phases of advancement with stop phases at the respective detection device.

In particular, according to a first preferred version illustrated in the figures, the respective one, i.e. the plurality of, in particular the first and the second, devices 181, 182, 201, 202, 221, 222, 241, 242 for detecting said articles 11 of the respective inspection section 18, 20, 22, 24, is, or are, stationary in the respective detection position, however, in accordance with a second preferred version, in a particularly advantageous manner, the respective one, i.e. the plurality of, in particular the first and the second, devices 181, 182, 201, 202, 221, 222, 241, 242 for detecting said articles 11 of the respective inspection section 18, 20, 22, 24, is, or are movable, between an upstream position, in particular of start of the detection of the respective article 11, and a downstream position, in particular of end of the detection of the same article 11, and then backwards towards said upstream position, in particular to start the detection of a subsequent article 11.

As can be seen from said figures, in an appreciably advantageous manner, said means 16 for inspecting said articles 11 on said means 14 for advancing the same articles 11 comprise respective means, or respective device, 181, 182, 201, 202, 221, 222, 241, 242 for detecting at least a respective image of the respective article 11, or a plurality of images of the respective article 11.

Advantageously, as can be seen from said figures, the respective device 181, 182, 201, 202, 221, 222, 241, 242 for detecting said articles 11 is in the form of a corresponding video camera, or camera, 181, 182, 201, 202, 221, 222, 241, 242.

In a particularly advantageous manner, as can be seen from said figures, said means, or respective video camera, or camera, 181, 182, 201, 202, 221, 222, 241, 242 for detecting at least one respective image of the respective article 11, in particular of the first and/or second inspection sections 18, 20, are arranged, or is arranged, above said means 14 for advancing said articles 11.

As can be seen from said figures, with appreciable advantage, said means, or respective video camera, or camera, 181, 182, 201, 202, 221, 222, 241, 242 for detecting at least one respective image of the respective article 11, in particular of the third and/or fourth inspection section 22, 24, are arranged or is arranged, below said means 14 for advancing said articles 11.

Advantageously, although not particularly shown in the attached figures, said means 16 for inspecting said articles 11, in particular the respective inspection section 18, 20, 22, 24, have, or has, means for emitting a corresponding electromagnetic radiation towards the respective article 11, in particular on the side opposite to that on which there are located said means, or respective video camera, or camera, 181, 182, 201, 202, 221, 222, 241, 242 for detecting at least one respective image of the respective article 11, i.e. on the same side as the one in which there are located said means, or respective video camera, or camera, 181, 182, 201, 202, 221, 222, 241, 242 for detecting at least one respective image of the respective article 11, or emitting the radiation according to a direction different from the vertical direction, for example according to a direction inclined by 90° or 45° with respect to the vertical.

Appreciably advantageously, as can be seen, said means for emitting a corresponding electromagnetic radiation towards the respective article 11, in particular said means for emitting a corresponding electromagnetic radiation of the first and/or second inspection sections 18, 20, are positioned below said means 14 for advancing said articles 11.

With advantage, as can be seen, said means 18 for emitting a corresponding electromagnetic radiation towards the respective article 11, in particular said means for emitting a corresponding electromagnetic radiation of the third and/or fourth inspection sections 22, 24, are positioned above said means 14 for advancing said articles 11.

As can be seen from said figures, advantageously, said electromagnetic radiation emitted by said emitting means towards the respective article 11 is in the form of an infrared, ultraviolet radiation or an electromagnetic visible field radiation and the respective video camera, or camera, 181, 182, 201, 202, 221, 222, 241, 242 for detecting at least one respective image of the respective article 11 is in the form of a video camera, or camera, sensitive to the same and corresponding electromagnetic radiation.

With appreciable advantage, as can be seen from said figures, means 14 for advancing said articles 11 comprising means 143 for supporting the respective article 11 are therefore provided.

Advantageously, as can be seen from said figures, the means 141 for supporting the respective article 11 are in the form of corresponding means 143 of lower rest for the same articles 11.

As can be seen from said figures, advantageously, said means 143 of lower rest for the same articles 11 define a rest surface 144 for the respective article 11.

With advantage, as can be seen from said figures, said means for supporting the respective article 11, i.e. said means 143 of lower rest for the same articles 11, are adapted to allow the passage of a respective electromagnetic radiation, in particular, especially a corresponding electromagnetic radiation that is sent on said article 11 and that is detected by the respective device, or video camera, or camera, 181, 182, 201, 202, 221, 222, 241, 242 for detecting said inspection means 16 of the same articles 11.

In a particularly advantageous manner, as can be seen from said figures, said means supporting the respective article 11, i.e. said means 143 of lower rest for the same articles 11, have a corresponding rest surface 144 for the respective article 11, i.e. a corresponding part thereof, which is transparent to the corresponding electromagnetic radiation to allow the passage of a respective electromagnetic radiation, in particular, especially a corresponding electromagnetic radiation that is sent on said article 11 and that is detected by the respective device, or video camera, or camera, 181, 182, 201, 202, 221, 222, 241, 242 for detecting said inspection means 16 of the same articles 11.

As can be seen from said figures, advantageously, said means 143 of lower rest for the same articles 11 comprise a corresponding plate, in particular of rigid material, 145, especially as illustrated plane-shaped and/or generally quadrangular in shape, preferably generally rectangular in shape, elongated towards the direction of advancement of the same articles 11.

Advantageously, as can be seen from said figures, said plate 145 defines said surface 144 of lower rest for the respective article 11, which, in turn, is preferably plane-shaped to conveniently receive the respective article 11.

In an appreciably advantageous manner, as can be seen from said figures, said plate 145, receives restingly, at least partly, the respective article 11, and/or is made of transparent material, or has at least a respective portion or window made in transparent material, in particular said plate, or the respective window, being transparent to a corresponding electromagnetic radiation, to allow the passage of a respective electromagnetic radiation, in particular, especially a corresponding electromagnetic radiation that is sent on said article 11 and that is detected by the respective device, or video camera, or camera, 181, 182, 201, 202, 221, 222, 241, 242 for detecting said inspection means 16 of the same articles 11.

As can be seen from said figures, advantageously, said plate 145 is carried by a corresponding support frame 146, in particular centrally open and especially having a first and a second longitudinally extreme spar element 146I, 146I and/or a first and a second longitudinally extreme crosspiece element 146t, 146t, especially integral to said spar elements 146I, 146I.

In a particularly advantageous manner, therefore, means 14 for advancing said articles 11 are provided which comprise at least one conveyor 141, 142, i.e. a plurality, especially, as illustrated, a first and a second conveyor 141, 142 for advancing said articles 11.

With appreciable advantage, as can be seen from said figures, the respective conveyor 141, 142 comprises a plurality of corresponding rigid panels 149, which are adapted to carry a corresponding article 11, which respective rigid panel 149 in particular which is defined by said support frame 146 and by said respective support plate 145 for the respective article 11.

As can be seen from said figures, advantageously, in the respective conveyor 141, 142, the respective rigid panel 149 is connected in an articulated manner to the adjacent rigid panels 149, i.e. which are upstream and downstream of it, especially articulating to them at the corresponding, in particular longitudinal, end of mutual connection 149a, 149b, in particular said rigid panels 149 are rotatable with respect to each other, with respect to a corresponding rotation axis RO, especially horizontal, preferably transverse with respect to the longitudinal direction of advancement of the same articles 11, preferably through corresponding hinge configurations.

In an appreciably advantageous manner, as can be seen from said figures, in practice, the respective conveyor is in the form of a conveyor belt 141, 142 with rigid elements, or panels, 149, articulated to each other, and rotating endlessly, preferably having an upper positive branch 140' for advancing and transporting said articles 11 and a lower branch 140" for returning backwards.

With advantage, as can be seen from said figures, the respective rigid element or panel 149 of the conveyor 141, 142 is preferably longitudinally elongated and/or plane-shaped, especially being generally quadrangular in shape, preferably generally rectangular in shape, elongated towards the direction of advancement of the same articles 11.

As can be seen from said figures, advantageously, the conveyor belt 141, 142 of the respective conveyor 141, 142 is carried by corresponding rotatable, longitudinally extreme, wheels 148, 148 for dragging, into rotation, the respective conveyor belt 141, 142, which said rotatable wheels 148, 148 preferably rotate with respect to corresponding rotation axes RR, especially horizontal ones, which is preferably transverse with respect to the longitudinal direction of advancement of the same articles 11, said rotation axes RR being rotatable wheels 148, 148 being in particular parallel to the articulation axes R0 of said rigid panels 149.

With appreciable advantage, as can be seen from said figures, said rotatable wheels 148, 148 move, or carry, in particular have, corresponding radial teeth 146d which are adapted to interact with corresponding engagement and dragging means 138, in particular in the form of corresponding recessed cavities, which means or cavities are provided in said conveyor belt 141, 142, in particular at the inner face thereof, especially which means or cavities are provided, in said rigid panels articulated to each other 149, preferably in the spar elements 146I, 146I of these, or at the adjacent longitudinal ends of these same spar elements 146I, 146I of the respective rigid panel 149, or at the adjacent longitudinal ends of adjacent rigid panels articulated to each other 149.

Advantageously, as can be seen from said figures, said rotatable support and dragging wheels 148, 148 have first and second impellers 148a, 148b, 148a, 148b integral in rotation and in particular carried by a common rotation shaft 148c.

Advantageously, as can be seen from said figures, said rotatable support and dragging wheels 148, 148, in particular the respective first and second impellers 148a, 148b, 148a, 148b that are integral in rotation, have corresponding radial teeth 148d interacting with said engagement means 138 provided of the respective conveyor 141, 142, or of said rigid panels 149.

As can be seen from said figures, in particular, said rotatable support and dragging wheels 148, 148, or the respective first and second impellers 148a, 148b, 148a, 148b that are integral in rotation, have corresponding radial teeth 148d, which interact with said engagement means 138 provided of the respective conveyor 141, 142, or in said rigid panels articulated to each other 149, preferably in the spar elements 146I, 146I of these, or at the adjacent longitudinal ends of these same spar elements 146I, 146I of the respective rigid panel 149, and which especially lie in the same plane, in particular vertical, of said impellers 148a, 148b.

In an appreciably advantageous manner, as can be seen from said figures, said means 14 for advancing said articles 11, in particular the respective conveyor 141, 142, or the upper or positive advancement part thereof, extend, or extends, along a plurality of inspection sections 18, 20, 22, 24, or at said devices 181, 182, 201, 202, 221, 222, 241, 242 for detecting said articles 11 of these.

In a particularly advantageous manner, as can be seen from said figures, means 261 for introducing said articles 11 at said means 16 for inspecting said articles 11 are provided.

As can be seen from said figures, advantageously, said means 261 for introducing said articles 11 at said means 16 for inspecting said articles 11 are in the form of a conveyor belt 261 that feeds in input said articles 11.

With appreciable advantage, as can be seen from said figures, said means 261 for introducing said articles 11 at said means 16 for inspecting said articles 11 extend between the corresponding first and second advancement means, or between said first and second conveyors 141, 142 for advancing said articles 11, in particular at the upstream part thereof.

In an appreciably advantageous manner, as can be seen from said figures, means 262 for exiting said articles 11 from said means 16 for inspecting the same articles 11 are provided.

As can be seen from said figures, advantageously, said means 262 for exiting said articles 11 at said means 16 for inspecting said articles 11 are in the form of a conveyor belt 262 that feeds in output said articles 11 subjected to inspection.

With advantage, as can be seen from said figures, said means 262 for exiting said articles 11 at said means 16 for inspecting said articles 11 extend between the corresponding first and second advancement means, or between said first and second conveyors 141, 142 for advancing said articles 11, in particular at the downstream part thereof.

With appreciable advantage, as can be seen from said figures, means 29 for unloading the defective articles 11' are provided.

As can be seen from said figures, advantageously, said means 29 for unloading the defective articles 11' are in the form of one or more drawers 291, 291 for receiving or inserting the corresponding defective article 11'.

Advantageously, as can be seen from said figures, said means 29 for unloading the defective articles 11' are provided at said means 262 for exiting said articles 11 from said means 16 for inspecting the same articles 11, in particular at the outer side thereof.

With advantage, as can be seen from said figures, means 27 are provided which are adapted to transfer said articles 11 from said means 261 for introducing said articles 11 at said means 16 for inspecting said articles 11 to said means 14 for advancing said articles 11 of the same means 16 for inspecting said articles 11, or to said first and second advancement means, or to said first and second conveyors 141, 142, for advancing said articles 11.

As can be seen from said figures, advantageously, said means 27 which are adapted to transfer said articles 11 from said means 261 for introducing said articles 11 at said means 16 for inspecting said articles 11 to said means 14 for advancing said articles 11 of the same means 16 for inspecting said articles 11, are in the form of corresponding robot means 271, 272.

In a particularly advantageous manner, as can be seen from said figures, said robot means 27, which are adapted to transfer said articles 11 from said means 261 for introducing said articles 11 at said means 16 for inspecting said articles 11 to said means 14 for advancing said articles 11 of the same means 16 for inspecting said articles 11, comprise a first and a second robot 271, 272, in particular in the form of a delta robot, each respectively adapted to transfer said articles 11 from said means 261 for introducing said articles 11 at said means 16 for inspecting said articles 11 to the respective said first and second advancement means, or to the respective of said first and second conveyors 141, 142, for advancing said articles 11, especially at an upstream end thereof.

Advantageously, as can be seen from said figures, means 28 are provided which are adapted to transfer said articles 11, when they are not defective, from said means 14 for advancing said articles 11 of the same means 16 for inspecting said articles 11, in particular from said first and second advancement means, or from said first and second conveyors 141, 142, for advancing said articles 11, to said means 262 for exiting said articles 11 from said means 16 for inspecting the same articles 11.

As can be seen from said figures, advantageously, means 28 are provided which are adapted to transfer said articles 11, when they are defective, from said means 14 for advancing said articles 11 of the same means 16 for inspecting said articles 11, in particular from said first and second advancement means, or from said first and second conveyors 141, 142, for advancing said articles 11, to means 29 for unloading the same defective articles 11.

In an appreciably advantageous manner, as can be seen from said figures, said means 28 which are adapted to transfer said articles 11, when they are defective, from said means 14 for advancing said articles 11 of the same means 16 for inspecting said articles 11, in particular from said first and second advancement means, or from said first and second conveyors 141, 142, for advancing said articles 11, to means 29 for unloading the same defective articles 11, are defined by the same means 28 which are adapted to transfer said articles 11, when they are not defective, from said means 14 for advancing said articles 11 of the same means 16 for inspecting said articles 11, in particular from said first and second advancement means, or from said first and second conveyors 141, 142, for advancing said articles 11, to said means 262 for exiting said articles 11 from said means 16 for inspecting the same articles 11.

In a particularly advantageous manner, as can be seen from said figures, said means 28 which are adapted to transfer said articles 11 from said means 14 for advancing said articles 11 of the same means 16 for inspecting said articles 11, in particular from said first and second advancement means, or from said first and second conveyors 141, 142, for advancing said articles 11, to said means 262 for exiting said articles 11 from said means 16 for inspecting the same articles 11, and/or said means 28 which are adapted to transfer said articles 11, when they are defective, from said means 14 for advancing said articles 11 of the same means 16 for inspecting said articles 11, in particular from said first and second advancement means, or from said first and second conveyors 141, 142, for advancing said articles 11, to means 29 for unloading the same defective articles 11, are in the form of corresponding robot means 281, 222.

As can be seen from said figures, advantageously, said robot means 28 which are adapted to transfer said articles 11 from said means 14 for advancing said articles 11 of the same means 16 for inspecting said articles 11, in particular from said first and second advancement means, or from said first and second conveyors 141, 142, for advancing said articles 11, to said means 262 for exiting said articles 11 from said means 16 for inspecting the same articles 11, and/or which are adapted to transfer said articles 11, when they are defective, from said means 14 for advancing said articles 11 of the same means 16 for inspecting said articles 11, in particular from said first and second advancement means, or from said first and second conveyors 141, 142, for advancing said articles 11, to means 29 for unloading the same defective articles 11, comprise first and second robot 281, 282, in particular in the form of delta robots, each respectively adapted to transfer said articles 11, when they are not defective, from the respective said first and second advancement means, or to the respective one of said first and second conveyors 141, 142, for advancing said articles 11, of said means 16 for inspecting said articles 11, especially from a downstream end thereof, to said means 262 for exiting said articles 11 from said means 16 for inspecting the same articles 11 or to said means 29 for unloading the defective articles 11'.

In particular, said transfer means or robots, in order to pick up the articles and deliver them to the respective arrival position, are provided with a respective article gripping head, which can be of any suitable configuration, and yet preferably provided with corresponding means with suction cup, or for sucking the respective article, or provided with a corresponding mechanical gripper for grasping the respective article.

With appreciable advantage, as can be seen from the aforementioned figures, means 17 for analysing the external appearance of the respective articles 11 are provided.

In an appreciably advantageous manner, as can be seen from said figures, said means 17 for analysing the external appearance of the respective articles 11 comprise means 171 for detecting the respective articles 11, in particular on said means 14 for advancing said articles 11, in particular there are provided first and second means 17, 17 for detecting the respective articles 11, respectively on said first and second advancement means, or on said first and second conveyors 141, 142, for advancing said articles 11.

As can be seen from said figures, the respective means 171 for detecting the respective articles 11, advantageously, said means 17 for analysing the external appearance of the respective articles 11, are in the form of corresponding video camera, or camera means, 171, 171.

With advantage, as can be seen from said figures, said means 17 for analysing the external appearance of the respective articles 11, or said means 171 for detecting the respective articles 11 thereof, are upstream of said inspection sections 18, 20, 22, 24.

With appreciable advantage, said means 16 for inspecting said articles 11 are adapted, i.e. said inspection sections 18, 20, 22, 24, in particular the first, second, third and fourth inspection sections 18, 20, 22, 24, are adapted, to identify the presence of particles, or bodies of foreign material, in the product 13 inside the package 11.

In particular, according to a different embodiment, said inspection sections 18, 20, 22, 24, adapted to identify the presence of particles, or bodies of foreign material, in the product 13 inside the package 11, could also be used to detect the articles in order to perform the analysis of the external appearance of the respective articles 11. In this case, the use of specific means 17 for analysing the external appearance of the respective articles 11 can be avoided. This embodiment may for example be implemented when the belt for advancing the articles moves with intermittent motion.

In particular, said particles or bodies of foreign material can for example be in the form of fragments of glass, of rubber, of plastic, insects, or even inhomogeneity of the matter itself, due for example to the abundant presence of air in the matter itself.

Advantageously, as can be seen from said figures, the apparatus 10 comprises respective electronic computer control means 30.

As can be seen from said figures, advantageously, said electronic computer control means 30 receive said images from said means 16 for inspecting said articles 11, or from said inspection section 18, 20, 22, 24.

With advantage, as can be seen from said figures, said control means 30 comprise artificial intelligence means which are adapted to process the images received from said means 16 for inspecting said articles 11, i.e. the respective inspection section 18, 20, 22, 24 of said articles 11, and to determine whether the respective article 11 is defective or whether it is not defective, i.e. whether it has unwanted particles.

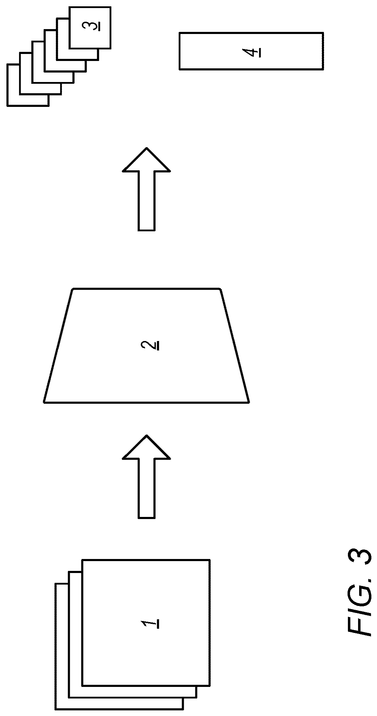

In particular, as can be seen from Figure 3, said artificial intelligence means are implemented by an inspection program that implements a convolutional neural network 2 for the identification of objects in the images, trained to predict the position and type of any defects present in the articles. The network is constituted by 24 convolutional layers, useful for extracting high-level information from the input images, and by 2 dense layers. The latter produce in output the spatial coordinates of the defects and the class they belong to.

The neural network accepts images in 3 channels (RGB) 1 in input. The output consists of a list of bounding boxes 3, described by the coordinates of the upper left corner, height and width. In addition, a vector of numerical values 4 encoding the class of the defect contained in each bounding box is produced in output.

Advantageously, as can be seen from said figures, said electronic computer control means 30 are adapted to command said transfer means 28 to transfer said articles 11, when they are not defective, to said means 262 for exiting said articles 11 from said means 16 for inspecting the same articles 11, or, when they are defective, to said means 29 for unloading the same defective articles 11.

As can be seen from said figures, in a particularly advantageous manner, said electronic computer control means 30 comprise corresponding vizualization display means 301, 301.

In particular, according to a different embodiment, the articles detected with the corresponding video cameras could simply be displayed at said displays 301, 301 for direct control by the operators in charge.

In practice, as is evident, the technical characteristics illustrated above allow, individually or in a respective combination, achieving one or more of the following advantageous results:
- it is possible to carry out a verification of said articles that is of significant quality, i.e. that has a reduced risk of obtaining false positives or false negatives, at the same time operating with a high productivity or high working speed;
- it is possible to insert the present apparatus in plants or apparatuses operating at high working speeds, in particular without slowing down or reducing their productivity;
- it is possible to detect details of the article, in particular of the package, which are not visible to the human eye;
- the activity of the operators in charge of control is made more effective.

The present invention is susceptible to evident industrial application. The person skilled in the art will also be able to imagine numerous modifications and/or variations to be made to the same invention, while remaining within the scope of the inventive concept, as extensively explained. Furthermore, the person skilled in the art will be able to imagine further preferred embodiments of the invention comprising one or more of the above illustrated features of the above-referenced preferred embodiment, in particular as set forth in the appended claims. Moreover, it must also be understood that all the details of the invention can be replaced by technically equivalent elements.

## Claims

1. Apparatus (10) for verifying the conformity or defectiveness of articles (11), in particular of packages containing a respective product (13), preferably in the form of a pharmaceutical product, or for curative or medical use; in particular said product (13) being in the form of a liquid or semi-liquid product, preferably the respective package being in the form of a bag, in particular in flexible material or film, or being in the form of an ampoule, a bottle, or the like, and especially being constituted by a transparent material, or at least partly by a transparent material, at a corresponding electromagnetic radiation; the apparatus comprising means (16) for inspecting the same articles (11) and is **characterized in that** it comprises a plurality of sections (18, 20, 22, 24) for inspecting said articles (11).

2. Apparatus according to claim 1 or according to the precharacterizing part of claim 1, **characterized in that** said apparatus (10) for verifying the conformity or defectiveness of corresponding articles (11), i.e. said means (16) for inspecting said articles (11), comprise a plurality of, in particular a first and a second inspection sectors, or lines, (161, 162) for respective articles (11) having respective means (141, 142) for advancing the corresponding articles (11), each inspection sector (161, 162) having one or more, preferably a plurality, of respective inspection sections (18, 20, 22, 24) of said articles (11).

3. Apparatus according to any one of the preceding claims or according to the precharacterizing part of claim 1, **characterized in that** said means (16) for inspecting said articles (11) are adapted to detect said articles (11) while they advance on the corresponding means (14) for advancing the same articles (11).

4. Apparatus according to any one of the preceding claims, **characterized in that** the sections (18, 20, 22, 24) for inspecting said articles (11) are distributed along the corresponding means (14) for advancing said articles (11).

5. Apparatus according to any one of the preceding claims or according to the precharacterizing part of claim 1, **characterized in that** said apparatus (10) for verifying the conformity or defectiveness of corresponding articles (11) comprises means (14) for advancing said articles (11), which in particular comprise a plurality of, in particular first and second means (141, 142) for advancing respective articles (11), respectively in corresponding, in particular a first and a second inspection sectors, or lines, (161, 162) for respective articles (11).

6. Apparatus according to any one of the preceding claims or according to the precharacterizing part of claim 1, **characterized in that** the respective means (14) for advancing said articles (11) are adapted to advance said articles (11) with continuous advancement speed, or the respective means (14) for advancing said articles (11) are adapted to advance said articles (11) with intermittent advancement motion.

7. Apparatus according to any one of the preceding claims or according to the precharacterizing part of claim 1, **characterized in that** the respective section (18, 20, 22, 24) for inspecting said articles (11) comprises respective means (181, 182, 201, 202, 221, 222, 241, 242) for detecting said articles (11) on said means (14) for advancing the same articles (11).

8. Apparatus according to any one of the preceding claims or according to the precharacterizing part of claim 1, **characterized in that** said means (16), i.e. the respective inspection section (18, 20, 22, 24) comprises respective means (201, 202, 221, 222, 241, 242) for detecting the respective article (11) that follow in advancing the respective article (11), i.e. the respective means (201, 202, 221, 222, 241, 242) for detecting the respective article (11) remain stationary, when said articles (11) advance with intermittent advancement motion, stopping at the same detection means to such an extent that the detection of the same articles (11) is allowed.

9. Apparatus according to any one of the preceding claims or according to the precharacterizing part of claim 1, **characterized in that** said means (16) for inspecting said articles (11) on said means (14) for advancing the same articles (11) comprise respective means, or respective device, (181, 182, 201, 202, 221, 222, 222, 241, 242) for detecting at least a respective image of the respective article (11), especially the respective device (181, 182, 201, 202, 221, 241, 242) for detecting said articles (11) being in the form of a corresponding video camera, or camera, (181, 182, 201, 202, 221, 222, 241, 242).

10. Apparatus according to claim 9, **characterized in that** said means, or respective video camera, or camera, (181, 182, 201, 202, 221, 222, 241, 242) for detecting at least one respective image of the respective article (11), in particular of the first and/or second inspection sections (18, 20), are arranged, or is arranged, above said means (14) for advancing said articles (11) or below said means (14) for advancing said articles (11).

11. Apparatus according to any one of the preceding claims or according to the precharacterizing part of claim 1, **characterized in that** said means (16) for inspecting said articles (11), in particular the respective inspection section (18, 20, 22, 24), have, or has, means for emitting a corresponding electromagnetic radiation towards the respective article (11), in particular on the side opposite to that on which there are located said means, or respective video camera, or camera, (181, 182, 201, 202, 221, 222, 241, 242) for detecting at least one respective image of the respective article (11), i.e. on the same side as the one in which there are located said means, or respective video camera, or camera, (181, 182, 201, 202, 221, 222, 241, 242) for detecting at least one respective image of the respective article (11), or emitting the radiation according to a direction different from the vertical direction, for example according to a direction inclined by 90° or 45° with respect to the vertical.

12. Apparatus according to claim 11, **characterized in that** said electromagnetic radiation emitted by said emission means towards the respective article (11) is in the form of an infrared, ultraviolet or visible field radiation, and the respective video camera, or camera, (181, 182, 201, 202, 221, 222, 241, 242) for detecting at least one respective image of the respective article (11) is in the form of a video camera, or camera, sensitive to said electromagnetic radiation.

13. Apparatus according to any one of the preceding claims or according to the precharacterizing part of claim 1, **characterized in that** means (14) for advancing said articles (11) comprising means (143) for supporting the respective article (11) are provided.

14. Apparatus according to claim 13, **characterized in that** said means for supporting the respective article (11), i.e. said means (143) of lower rest for the same articles (11), are adapted to allow the passage of a respective electromagnetic radiation, in particular, especially of a corresponding electromagnetic radiation that is sent on said article (11) and that is detected by the respective device, or video camera, or camera, for detecting (181, 182, 201, 202, 221, 222, 241, 242) said means (16) for inspecting the same articles (11); in particular said means supporting the respective article (11), i.e. said means (143) of lower rest for the same articles (11), have a corresponding rest surface (144) for the respective article (11), i.e. a corresponding part thereof, which is transparent to the corresponding electromagnetic radiation to allow the passage of a respective electromagnetic radiation, in particular, especially of a corresponding electromagnetic radiation that is sent on said article (11) and that is detected by the respective device, or video camera, or camera, for detecting (181, 182, 201, 202, 221, 222, 241, 242) said means (16) for inspecting said articles (11).

15. Apparatus according to any one of the preceding claims or according to the precharacterizing part of claim 1, **characterized in that** there are provided means (14) for advancing said articles (11) comprising at least one conveyor (141, 142), i.e. in particular a plurality, especially a first and a second conveyor (141, 142) for advancing said articles (11); in particular the respective conveyor (141, 142) comprising a plurality of corresponding rigid panels (149), which are adapted to carry a corresponding article (11), which rigid panel (149) in particular which is defined by said support frame (146) and by the respective rest plate (145) for the respective article (11).

16. Apparatus according to claim 15, **characterized in that** in the respective conveyor (141, 142), the respective rigid panel (149) is connected in an articulated manner to the adjacent rigid panels (149), i.e. which are upstream and downstream of it, especially articulating to them at the corresponding, in particular longitudinal, ends of mutual connection (149a, 149b), in particular said rigid panels (149) are rotatable with respect to each other, with respect to a corresponding rotation axis (RO), especially horizontal, preferably transverse with respect to the longitudinal direction of advancement of the same articles (11).

17. Apparatus according to any one of the preceding claims 15 and 16, **characterized in that** the conveyor belt (141, 142) of the respective conveyor (141, 142) is carried by corresponding rotatable, longitudinally extreme, wheels (148, 148) for dragging, into rotation, the respective conveyor belt (141, 142), which said rotatable wheels (148, 148) preferably rotate with respect to corresponding rotation axes (RR), especially horizontal ones, which is preferably transverse with respect to the longitudinal direction of advancement of the same articles (11), which rotation axes (RR) are in particular parallel to the articulation axes (RO) of said rigid panels (149).

18. Apparatus according to any one of the preceding claims or according to the precharacterizing part of claim 1, **characterized in that** there are provided means (261) for introducing said articles (11) at said means (16) for inspecting said articles (11), and/or **in that** there are provided means (262) for exiting said articles (11) from said means (16) for inspecting the same articles (11), and/or there are provided means (29) for unloading the defective articles (11'), in particular in the form of one or more drawers (291, 291) for receiving or inserting the corresponding defective article (11'); and/or **in that** there are provided means (27) which are adapted to transfer said articles (11) from said means (261) for introducing said articles (11) at said means (16) for inspecting said articles (11) to said means (14) for advancing said articles (11) of the same means (16) for inspecting said articles (11), i.e. to said first and second advancement means, or to said first and second conveyors (141, 142), for advancing said articles (11), and/or **in that** there are provided means (28) which are adapted to transfer said articles (11), when they are not defective, from said means (14) for advancing said articles (11) of the same means (16) for inspecting said articles (11), in particular from said first and second advancement means, or from said first and second conveyors (141, 142), for advancing said articles (11), to said means (262) for exiting said articles (11) from said means (16) for inspecting the same articles (11), or to means (29) for unloading the defective articles (11).

19. Apparatus according to any one of the preceding claims or according to the precharacterizing part of claim 1, **characterized in that** said means (16) for inspecting said articles (11) are adapted, i.e. said inspection sections (18, 20, 22, 24) are adapted, to identify the presence of particles in the product (13) inside the package (11).

20. Apparatus according to any one of the preceding claims or according to the precharacterizing part of claim 1, **characterized in that** control means (30) are provided which comprise artificial intelligence means which are adapted to process the images received from said means (16) for inspecting said articles (11), i.e. the respective inspection section (18, 20, 22, 24) of said articles (11), and to determine whether the respective article (11) is defective or whether it is not defective, i.e. whether it has unwanted particles.

21. Conveyor (141, 142), **characterized in that** it is made according to any one of the corresponding preceding claims.
